# EUROPÄISCHE PATENTSCHRIFT

(11) **EP 1 254 312 B1**
(45) Veröffentlichungstag und Bekanntmachung des Hinweises auf die Patenterteilung: **24.05.2006**
(21) Anmeldenummer: 00987456.1
(22) Anmeldetag: 22.12.2000
(51) Int. Cl.: F02M 61/14, F02M 69/04, F02F 1/24

(54) **BRENNKRAFTMASCHINE MIT EINSPRITZVENTILEN**
INTERNAL COMBUSTION ENGINE WITH INJECTION VALVES
MOTEUR A COMBUSTION INTERNE A SOUPAPES D'INJECTION

(30) Priorität: 28.01.2000 DE 10003603
(43) Veröffentlichungstag der Anmeldung: 06.11.2002
(73) Patentinhaber: Volkswagen Aktiengesellschaft, 38436 Wolfsburg (DE)
(72) Erfinder: LIPPERT, Eduard, 38547 Calberlah (DE)
(86) Internationale Anmeldenummer: PCT/EP2000/013245
(87) Internationale Veröffentlichungsnummer: WO 2001/055586

(56) Entgegenhaltungen:
- EP-A- 0 565 867
- EP-A- 0 969 203
- DE-A- 19 724 165
- US-A- 5 925 854
- PATENT ABSTRACTS OF JAPAN vol. 1996, no. 05, 31. Mai 1996 (1996-05-31) & JP 08 028394 A (HITACHI LTD), 30. Januar 1996 (1996-01-30)

## Beschreibung

Die Erfindung betrifft eine Brennkraftmaschine mit einem Zylinderkopf und Einspritzventilen für Kraftstoff, wobei der Zylinderkopf jeweilige Aufnahmen für die Einspritzventile aufweist, gemäß dem Oberbegriff des Anspruchs 1.

Bei Brennkraftmaschinen mit Einspritzventilen für Kraftstoff, welche einen asymmetrischen Einspritzstrahl aufweisen, ist die relative Lage des Einspritzstrahles bzgl. eines Gemischbildungsraumes, wie beispielsweise ein Brennraum bei Direkteinspritzung oder einer Kammer im Ansaugkanal, für eine korrekte Gemischbildung von herausragender Bedeutung. Bereits minimale Drehungen des Einspritzventils in der Aufnahme um dessen Längsachse weg von einer optimalen Lage können zu erheblich verschlechterter Gemischbildung führen und somit eine Motorfunktion bzgl. Leistung, Schadstoffemission und Kraftstoffverbrauch entsprechend verschlechtem. Daher ist es bei der Montage derartiger Brennkraftmaschine beim Einsetzen der Einspritzventile in jeweilige Aufnahmen am Zylinderkopf notwendig, eine Lage bzgl. einer Drehung um eine Längsachse des Einspritzventils genau einzuhalten. Dies ist jedoch aufwendig und kostenintensiv.

Aus der Schrift EP 0735 267 A2 ist bereits eine Brennkraftmaschine bekannt, bei der die Einspritzventile derart am Zylinderkopf befestigt sind, dass sie hinsichtich ihrer Winkel- und Drehlage fixiert und festgelegt sind. Dabei ist die bekannte Verdrehsicherung der Einspritzventile dort über einen zusätzlichen Flansch mit Zweikant gebildet. Diese bekannte Verdrehsicherung baut jedoch relativ aufwendig und verursacht somit zusätzlichen Bauraum und Montageaufwand.

Der vorliegenden Erfindung liegt die Aufgabe zugrunde, bei der Montage von Brennkraftmaschinen mit Einspritzventilen eine Vereinfachung und Kostenreduzierung zu erzielen.

Diese Aufgabe wird erfindungsgemäß durch eine Brennkraftmaschine der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß an der Aufnahme und an einem jeweiligen Einspritzventil zusammenwirkende Mittel derart ausgebildet sind, daß bei Anordnen des Einspritzventils in der Aufnahme eine Ausrichtung des Einspritzventils in der Aufnahme bzgl. Drehung um eine Längsachse des Einspritzventils vorbestimmt ist.

Dies hat den Vorteil, daß bei Einspritzventilen mit asymmetrischem Einspritzstrahl eine gewünschte, optimale Lage des Einspritzstrahls relativ zum Brennraum (bei einer Direkteinspritzung) oder relativ zu einer Gemischbildungskammer in einem Ansaugkanal (bei Saugrohreinspritzung) automatisch mit Einstecken des Einspritzventils in die Aufnahme am Zylinderkopf eingehalten wird, ohne daß dafür zusätzliche Justierungsmaßnahmen erforderlich sind. Hierdurch wird eine Montage der Brennkraftmaschine erheblich vereinfacht.

Zweckmäßigerweise wirken die zusammenwirkenden Mittel mechanisch zusammen.

Beispielsweise sind die Aufnahmen und die Einspritzventile derart angeordnet, daß eine Direkteinspritzung von Kraftstoff in jeweilige Brennräume von Zylindern der Brennkraftmaschine erfolgt.

In einer bevorzugten Ausführungsform umfassen die zusammenwirkenden Mittel am Einspritzventil eine Rippe und an der Aufnahme einen dazu passenden Schlitz, wobei die Rippe beispielsweise an einem Ausleger für eine Steckverbindung zum Anschluß einer Ventilsteuerung ausgebildet ist.

In einer bevorzugten Weiterbildung weist der Zylinderkopf einen Flansch auf, in dem die Aufnahmen für Einspritzventile wenigstens teilweise ausgebildet sind.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine perspektivische Ansicht eines Einspritzventils für eine erfindungsgemäße Brennkraftmaschine und
- Fig.2: eine perspektivische Ansicht eines Teils eines Zylinderkopfes einer erfindungsgemäßen Brennkraftmaschine.

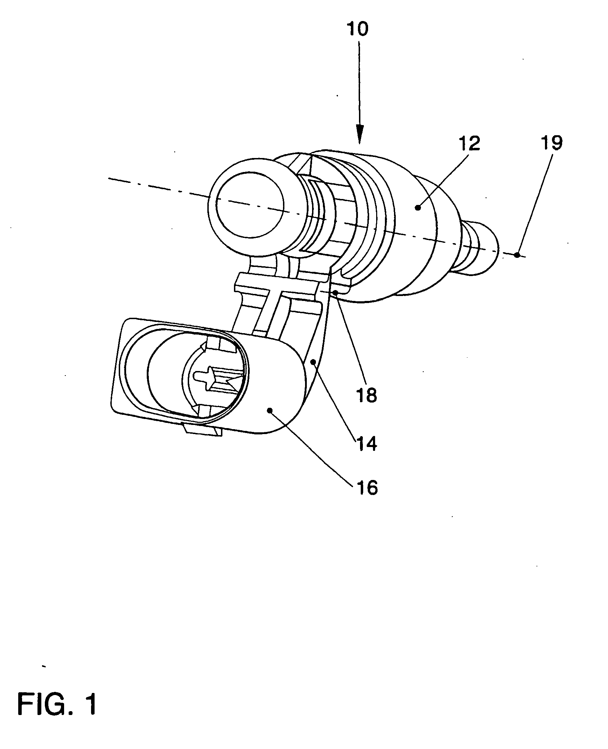

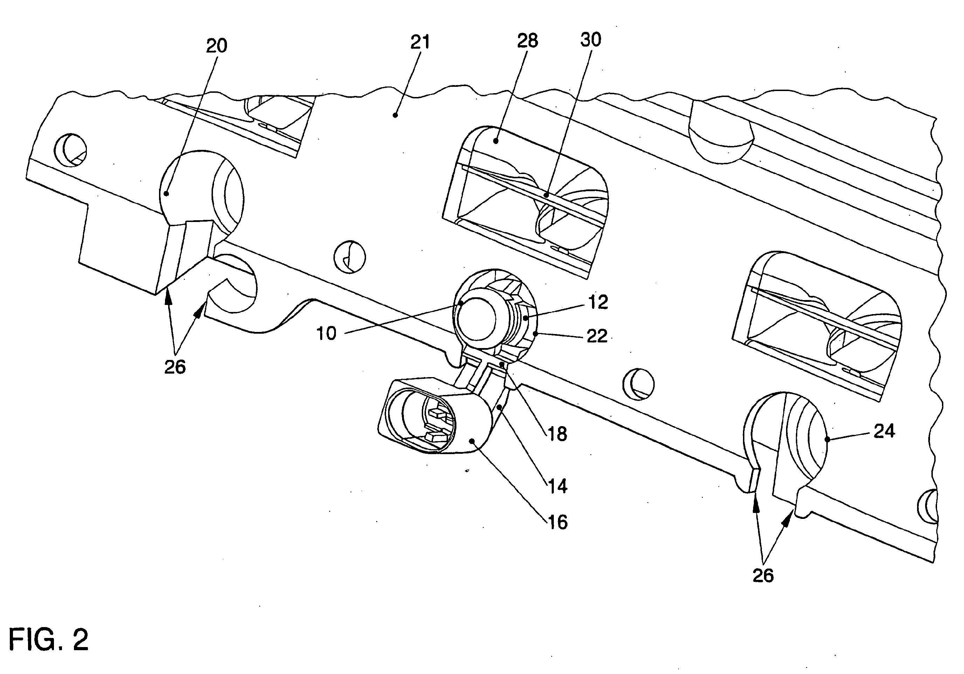

Das aus Fig. 1, ersichtliche Einspritzventil 10 umfaßt einen Ventilkörper 12 und einen Ausleger 14 für eine Steckverbindung 16 zum Anschluß einer nicht dargestellten Ventilsteuerung. An diesem Ausleger 14 ist eine Rippe 18 einstückig angeformt. Mit 19 ist eine Längsachse des Einspritzventils bezeichnet.
Der aus Fig. 2 ersichtliche Zylinderkopf 21 ist für eine Brennkraftmaschine mit Direkteinspritzung ausgelegt und umfaßt mehrere Aufnahmen 20, 22, 24 für jeweilige Einspritzventile sowie einen Einlaßkanal 28 mit einem eingegossenen Tumbleblech 30.

Diese Aufnahmen 20, 22, 24 weisen jeweils einen Schlitz 26 auf, welcher passend zur Rippe 18 des Einspritzventils 10 ausgebildet ist. In die Aufnahme 22 ist ein Einspritzventil 10 eingesetzt, wobei anschaulich ersichtlich ist, daß die Rippe 18 und der Schlitz 26 derart mechanisch zusammenwirken, daß eine Lage bzw. eine Ausrichtung des Einspritzventils 10 in der Aufnahme 22 bzgl. einer Drehung um die Längsachse 19 vorbestimmt ist. Hierzu paßt die Rippe 18 genau in den Schlitz 26, so daß weder ein Einsetzten des Einspritzventils 10 in die Aufnahme 22 in falscher Ausrichtung noch ein verdrehen des Einspritzventils 10 nach dem Einsetzen in die Aufnahme 22 möglich ist.

### BEZUGSZEICHENLISTE

- 10: Einspritzventil
- 12: Ventilkörper
- 14: Ausleger
- 16: Steckverbindung
- 18: Rippe
- 19: Längsachse
- 20: Aufnahme
- 21: Zylinderkopf
- 22: Aufnahme
- 24: Aufnahme
- 26: Schlitz
- 28: Einlaßkanal
- 30: Tumbleblech

## Patentansprüche

1. Brennkraftmaschine, insbesondere für ein Kraftfahrzeug, mit einem Zylinderkopf (21) und Einspritzventilen (10) für Kraftstoff, wobei der Zylinderkopf (21) jeweilige Aufnahmen (20, 22, 24) für die Einspritzventile (10) aufweist, **dadurch gekennzeichnet, daß** an der Aufnahme (20, 22, 24) und an einem jeweiligen Einspritzventil (10) zusammenwirkende Mittel (18, 26) derart ausgebildet sind, daß bei Anordnen des Einspritzventils (10) in der Aufnahme (20, 22, 24) eine Ausrichtung des Einspritzventils (10) in der Aufnahme (20, 22, 24) bzgl. Drehung um eine Längsachse (19) des Einspritzventils (10) vorbestimmt ist, wobei die zusammenwirkenden Mittel am Einspritzventil (10) eine Rippe (18) und an der Aufnahme (20, 22, 24) einen dazu passenden Schlitz (26) umfassen.

2. Brennkraftmaschine nach Anspruch 1, **dadurch gekennzeichnet, daß** die zusammenwirkenden Mittel (18, 26) mechanisch zusammen wirken.

3. Brennkraftmaschine nach Anspruch 1 oder 2, **dadurch gekennzeichnet, daß** die Aufnahmen (20, 22, 24) und die Einspritzventile (10) derart angeordnet sind, daß eine Direkteinspritzung von Kraftstoff in jeweilige Brennräume von Zylindem der Brennkraftmaschine erfolgt.

4. Brennkraftmaschine nach Anspruch 1, **dadurch gekennzeichnet, daß** die Rippe (18) an einem Ausleger (14) für eine Steckverbindung (16) zum Anschluß einer Ventilsteuerung ausgebildet ist.

5. Brennkraftmaschine nach einem der vorhergehenden Ansprüche, **dadurch gekennzeichnet, daß** der Zylinderkopf (21) einen Flansch aufweist, in dem die Aufnahmen (20, 22, 24) für Einspritzventile (10) wenigstens teilweise ausgebildet sind.

## Claims

1. Internal combustion engine, in particular for a motor vehicle, having a cylinder head (21) and injection valves (10) for fuel, the cylinder head (21) having respective receptacles (20, 22, 24) for the injection valves (10), **characterized in that** interacting means (18, 26) are formed on the receptacle (20, 22, 24) and on a respective injection valve (10) in such a way that when the injection valve (10) is arranged in the receptacle (20, 22, 24), the alignment of the injection valve (10) in the receptacle (20, 22, 24) is predetermined with regard to rotation about a longitudinal axis (19) of the injection valve (10), the interacting means comprising a rib (18) on the injection valve (10) and a slot (26), which is adapted to said rib (18), on the receptacle (20, 22, 24).

2. Internal combustion engine according to Claim 1, **characterized in that** the interacting means (18, 26) interact mechanically.

3. Internal combustion engine according to Claim 1 or 2, **characterized in that** the receptacles (20, 22, 24) and the injection valves (10) are arranged in such a way that fuel is directly injected into respective combustion chambers of cylinders of the combustion engine.

4. Internal combustion engine according to Claim 1, **characterized in that** the rib (18) is formed on an arm (14) for a plug-type connection (16) for connecting a valve controller.

5. Internal combustion engine according to one of the preceding claims, **characterized in that** the cylinder head (21) has a flange in which the receptacles (20, 22, 24) for injection valves (10) are at least partially formed.

## Revendications

1. Moteur à combustion interne, en particulier pour un véhicule automobile, avec une culasse (21) et des injecteurs (10) pour carburant, la culasse (21) présentant des logements (20, 22, 24) respectifs pour les injecteurs (10), **caractérisé en ce que**, sur le logement (20, 22, 24) et un injecteur (10) correspondant, on a conçu des moyens agissant conjointement (18, 26) de manière telle qu'en disposant l'injecteur (10) dans le logement (20, 22, 24), on assure un alignement de l'injecteur (10) dans le logement (20, 22, 24), relativement à une rotation autour de l'axe longitudinal (19) de l'injecteur (10), les moyens agissant conjointement comprenant, sur l'injecteur (10), une nervure (18) et, sur le logement (20, 22, 24), une rainure (26) s'y adaptant.

2. Moteur à combustion interne selon la revendication 1, **caractérisé en ce que** les moyens (18, 26) agissant conjointement ont une action conjointe mécanique.

3. Moteur à combustion interne selon la revendication 1 ou 2, **caractérisé en ce que** les logements (20, 22, 24) et les injecteurs (10) sont disposés de manière telle qu'une injection directe de carburant a lieu dans les chambres de combustion respectives des cylindres du moteur à combustion interne.

4. Moteur à combustion interne selon la revendication 1, **caractérisé en ce que** la nervure (18) est réalisée sur un bras (14) en vue d'une connexion par enfichage (16) pour le branchement d'une commande d'injecteur.

5. Moteur à combustion interne suivant l'une quelconque des revendications précédentes, **caractérisé en ce que** la culasse (21) présente une bride dans laquelle sont réalisés, au moins partiellement, les logements (20, 22, 24) pour les injecteurs (10).
